# EUROPEAN PATENT APPLICATION

(11) **EP 0 913 112 A1**
(43) Date of publication of application: **06.05.1999**
(21) Application number: 97308785.1
(22) Date of filing: 31.10.1997
(51) Int. Cl.: A47J 37/12, G07F 9/10

(54) **Vending machine with cooking device**

(71) Applicant: Tege Patents Aktiengesellschaft, 9497 Triesenberg (LI)
(72) Inventor: Hughes, Martin Lawrence, Milton Keynes, Bucks (GB); Scudamore, Andrew Peter, Great Shelford, Cambridge (GB)
(74) Representative: Brunner, Michael John

(57) **Abstract**

A vending machine for vending a cooked product, has a cooking vessel 65 for cooking the product in oil in use. The cooking vessel has a substantially circular form and a closed bottom 652 and an open top. Disposed along its central axis is a drive housing 653 sealingly fixed to the bottom of the vessel and having openings at its top and bottom. Four baskets 61 are supported for rotation within the vessel 65 around its central axis, each basket being pivotally mounted adjacent the perimeter of the vessel. A basket lifting mechanism 68 is disposed adjacent one side of the vessel and a drive mechanism 66 is disposed beneath the vessel. The drive mechanism 66 has a shaft 664 extending through the central housing 653 and connected to the baskets 61 to cause rotation of the baskets around the central axis in use.

## Description

The present invention relates to vending machines for dispensing products fried in cooking oil and, more particularly, to a vending machine of the type generally described in our co-pending European patent applications numbers 97304257.5 and 97304258.3.

In the above mentioned European patent applications we describe a vending machine for vending portions of potato chips (french fries), the french fries being produced by rehydrating and extruding powdered potato, cooking the extruded product in cooking oil, and then dispensing the cooked product into a cup for vending to the customer.

In our application number 97305258.3 we describe how the product is extruded into one of four baskets which are disposed within a cooking pot which contains cooking oil. An agitator mechanism is provided in the bottom of the cooking pot for maintaining a flow of oil around a volume displacer (or spacer) disposed within the cooking pot in order to ensure uniform heating of the oil within the cooking pot or vessel. This agitator is described as being driven by a motor disposed beneath the cooking pot through a pair of concentric drive shafts, one passing up from the motor through a central tube forming part of the cooking pot and a second, driven by the first, extending downwardly outside the tube, within the oil in the cooking pot, to the agitator. The agitator drive motor is located below the cooking pot due to constraints on space above the cooking pot arising from the need to maintain a hood over the cooking pot and to provide a drive mechanism for rotating the baskets into which the french fries are extruded in use.

In practice, it has been found that oil residues are deposited on the drive mechanism for the baskets and it has also been found desirable to space the cooking pot hood as close to the top of the cooking pot as possible.

According to the present invention therefore a vending machine for vending a cooked product, comprises a cooking vessel for cooking the product in oil in use, the cooking vessel having a substantially circular form and having a closed bottom and an open top, and, disposed along its central axis, a drive housing sealingly fixed to the bottom of the vessel and having openings at its top and bottom; a plurality of baskets supported for rotation within the vessel around its central axis, each basket being pivotally mounted adjacent the perimeter of the vessel; a basket lifting mechanism disposed adjacent one side of the vessel; and a drive mechanism disposed beneath the vessel and having a shaft extending through the central housing and connected to the baskets to cause rotation of the baskets around the central axis in use.

Thus, the motor of the drive mechanism can be located away from the rising oil residues and the hood can be closely located over the cooking vessel.

Preferably, an agitator is also provided adjacent the bottom of the cooking vessel and is driven by a motor connected to the agitator by a drive linkage having components extending through the central housing and around the outside of the central housing.

The central housing is preferably tubular.

Preferably, the basket lifting mechanism comprises a lever extending over the top of the cooking vessel and having a coupling engagable with each of the baskets in turn as they are rotated into position, the lever being rotatable so as to lift the basket about its pivot point by a motor.

The lever may comprise a substantially V or U-shaped rod pivotally mounted at its ends, the pivot axis of the rod being arranged to coincide with the pivot axis of each of the baskets when they are in position to be engaged by the lifting lever.

One example of a cooking vessel assembly according to the present invention will now be described with reference to the accompanying drawings in which:
Figure 1 is a diagrammatic front view of a vending machine embodying the cooking vessel assembly of the present invention;
Figure 2 is a plan view of the cooking vessel assembly; and
Figure 3 is a partially sectioned elevational view of the cooking vessel assembly.

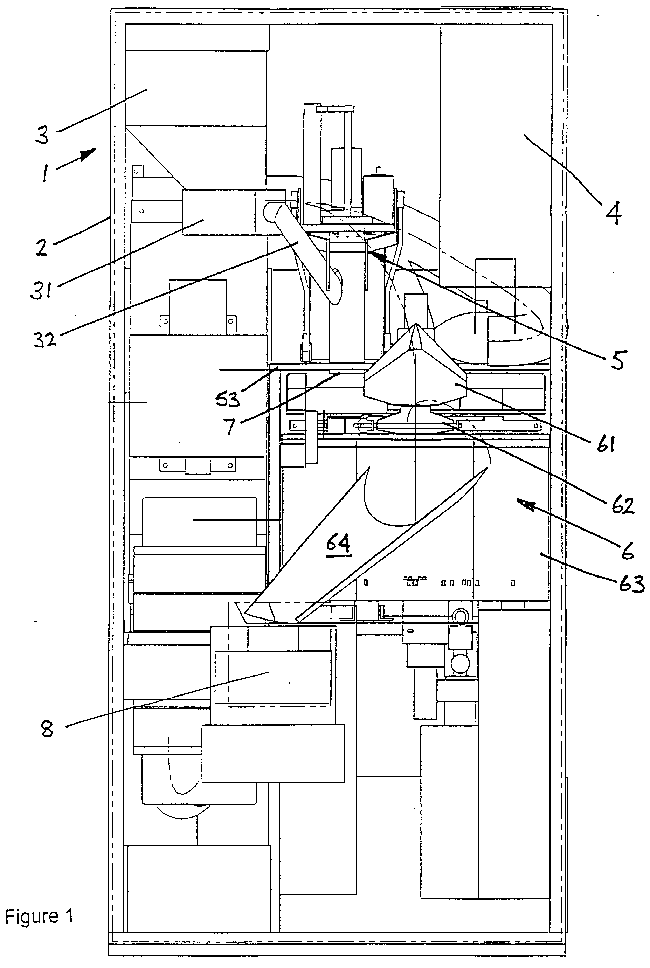

The catering machine 1 shown in Figure 1 is a vending machine designed for dispensing orders of potato chips (french fries) and includes a casing 2 within which all the operative components of the vending machine are disposed.

The vending machine includes a hopper 3 for containing a powdered potato product and a dispenser 4 of condiments such as tomato sauce in miniature pots or otherwise suitably packaged, and which are dispensed separately or with the chips. Water is fed from a mains supply. The powdered potato product is fed, via means of a auger system 31 and a chute 32, and water from the mains supply is fed via a suitable pressure and flow control mechanism, which includes a pump, flow and pressure regulators and flow control valves (none of which are shown), to a rehydration and extrusion apparatus 5 which will be described in more detail below. A sliding gate valve 7 supported under a support plate 53 closes off the bottom of the rehydration and extrusion apparatus.

From the rehydration and extrusion apparatus rehydrated potato mix is extruded into one of four cooking baskets 61 which form part of a cooking station 6 (see our co-pending European patent application number 97304258.3). The cooking station 6 includes a housing 63 in which is disposed a vessel providing a bath of cooking oil which is heated to the desired temperature by external heater bands (not shown). Individual portions of potato chips or french fries are extruded into the cooking baskets 61 for cooking within the oil bath. The individual baskets are rotated on a carrousel 62 and after having been cooked for the desired length of time the respective cooking basket is pivoted out of the cooking oil to deposit the portion of chips onto a delivery chute 64 from where it is dispensed at the front of the vending machine into cups provided from a cup supply mechanism (not shown) to a cup filling mechanism 8 and vended to the user.

The vending machine includes an air treatment system as described in our co-pending European patent application number 97304257.5 and which will not be further described in this specification as it forms no part of the present invention. Likewise, other components of the vending machine which are not necessary for a full understanding of the rehydration and extrusion apparatus of the present invention are not described in detail.

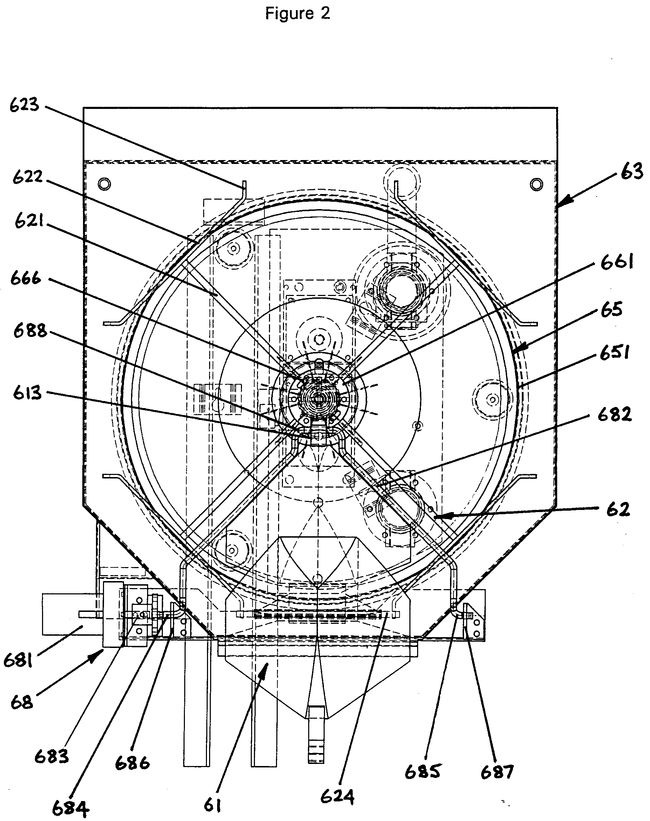

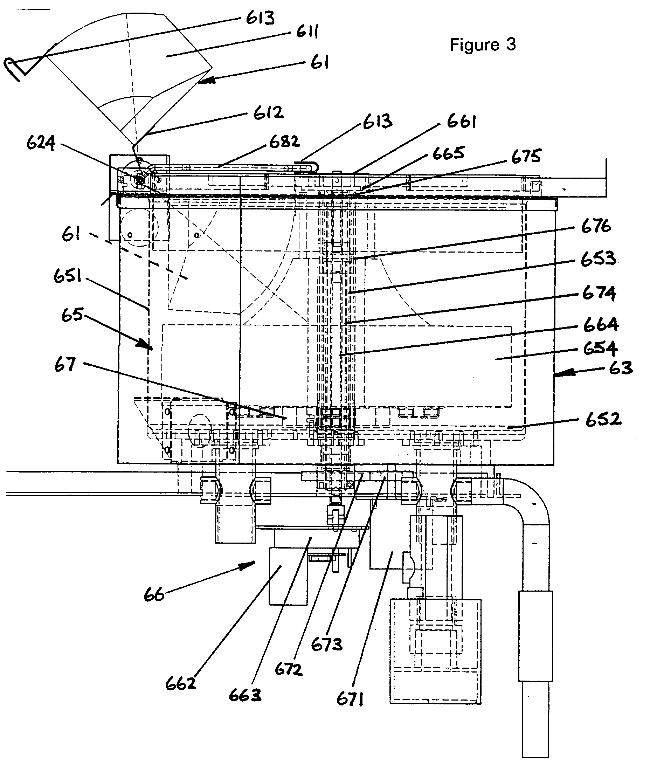

Figures 2 and 3 show the cooking vessel assembly in detail. The cooking vessel assembly or cooking station 6 comprises a housing 63 in which is disposed a cooking vessel 65. A carousel 62 supports four cooking baskets 61 for rotation around the vessel during use of the vending machine.

The cooking vessel 65 has a circular side wall 651, a bottom wall 652 and a central tube 653. These are all of stainless steel and the tube 653 is bolted and sealed with an O-ring (not shown) to the bottom 652 and is open through the bottom as well as being open at its top end.

The carousel 62 comprises frame elements 621 which extend substantially radially from the centre of the vessel assembly over the top of the vessel 65, and frame elements 622 which are supported at the radially outer ends of the elements 621. At each end of each frame element 622 there is flange 623 which supports a pivot rod 624 on which is mounted a respective basket 61. Each basket comprises a perforated metal envelope 611, a pivot support link 612 which is engaged with the respective pivot rod 624, and a basket hook 613. In use, the underside of the basket hook 613 rests on a drive disk 661 as will be described later.

In order to drive the baskets around the cooking vessel 65, a drive mechanism 66 is provided which includes a drive motor 662 and gearbox 663 connected to the lower end of a drive tube 664 disposed inside the central tube 653 of the cooking vessel. At its upper end the drive tube 664 is connected to a drive plate 665 which connects via dogs (not shown) to the drive disk 661 on which are mounted the radially inner ends of the frame elements 621 of the carousel 62. A measure of basket position adjustment is provided by connecting the frame elements 621 to the basket drive disk 661 through slots 666 and screws (not shown). By this means, the baskets 61 can be driven around the central axis of the cooking vessel assembly.

An agitator 67 (similar to the agitator described in our co-pending application 97304258.3) is provided in the base of the cooking vessel 65 and causes flows of oil around a volume displacer 654 as described in our earlier application. The agitator 67 is driven from a motor and gearbox 671 via a pair of spur gears 672, 673, a drive tube 674 extending around the basket drive tube 664 within the central tube 653, a drive plate 675, and a secondary drive tube 676 which extends down around the outside of the central tube 653 and is engaged with the agitator 67. The spur gears 672 and 673 allow the motor and gear box 671 to be displaced sideways from the central axis of the cooking vessel.

A lifting mechanism 68 for lifting each of the baskets in turn into the raised position shown in Figure 3, incorporates a lifting motor and gearbox 681 driving a substantially V-shaped lifting rod 682 through a lost motion connector 683, each end 684, 685 of the lift rod 682 being pivotally supported in a bearing 686, 687. The lift motor and gearbox output connector 683 is coaxially aligned with the lifting rod 624 of each of the baskets 61 as they are rotated, by carousel 62, into the position shown in Figure 2. As the baskets are rotated into this position the lifting hook 613 engages a bite portion 688 of the lifting rod 682 whereby rotation of the lifting rod 682 causes the basket 61 to be lifted from the "in-vessel" position to the raised position as shown in Figure 3.

## Claims

1. A vending machine for vending a cooked product, comprising a cooking vessel for cooking the product in oil in use, the cooking vessel having a substantially circular form and having a closed bottom and an open top, and, disposed along its central axis, a drive housing sealingly fixed to the bottom of the vessel and having openings at its top and bottom; a plurality of baskets supported for rotation within the vessel around its central axis, each basket being pivotally mounted adjacent the perimeter of the vessel; a basket lifting mechanism disposed adjacent one side of the vessel; and a drive mechanism disposed beneath the vessel and having a shaft extending through the central housing and connected to the baskets to cause rotation of the baskets around the central axis in use.

2. A vending machine according to claim 1, wherein an agitator is also provided adjacent the bottom of the cooking vessel and is driven by a motor connected to the agitator by a drive linkage having components extending through the central housing and around the outside of the central housing.

3. A vending machine according to claim 1 or claim 2, wherein the central housing is tubular.

4. A vending machine according to any of claims 1 to 3, wherein the basket lifting mechanism comprises a lever extending over the top of the cooking vessel and having a coupling engagable with each of the baskets in turn as they are rotated into position, the lever being rotatable so as to lift the basket about its pivot point by a motor.

5. A vending machine according to claim 4, wherein the lever comprises a substantially V or U-shaped rod pivotally mounted at its ends, the pivot axis of the rod being arranged to coincide with the pivot axis of each of the baskets when they are in position to be engaged by the lifting lever.
